(19) Europäisches Patentamt / European Patent Office / Office européen des brevets

(11) EP 1 527 113 B1

(12) # FASCICULE DE BREVET EUROPEEN

(45) Date de publication et mention de la délivrance du brevet:
**11.04.2012 Bulletin 2012/15**

(21) Numéro de dépôt: **03766251.7**

(22) Date de dépôt: **22.07.2003**

(51) Int Cl.:
***C08F 297/02*** (2006.01) ***C08F 8/04*** (2006.01)
***C08L 53/00*** (2006.01) ***B60C 1/00*** (2006.01)

(86) Numéro de dépôt international:
**PCT/EP2003/007969**

(87) Numéro de publication internationale:
**WO 2004/013197 (12.02.2004 Gazette 2004/07)**

(54) **COMPOSITION DE CAOUTCHOUC UTILISABLE COMME GOMME DE LIAISON DANS UN PNEUMATIQUE**

KAUTSCHUKMISCHUNG GEEIGNET ALS VERBINDUNGSMATERIAL FÜR REIFEN

RUBBER COMPOSITION FOR USE AS A BONDING RUBBER IN A TYRE

(84) Etats contractants désignés:
**AT BE BG CH CY CZ DE DK EE ES FI FR GB GR HU IE IT LI LU MC NL PT RO SE SI SK TR**

(30) Priorité: **01.08.2002 FR 0209847**

(43) Date de publication de la demande:
**04.05.2005 Bulletin 2005/18**

(73) Titulaires:
- **Société de Technologie Michelin**
  **63000 Clermont-Ferrand Cedex 09 (FR)**
- **Michelin Recherche et Technique S.A.**
  **1763 Granges-Paccot (CH)**

(72) Inventeurs:
- **GRUDET, Aline**
  **F-63000 Clermont-Ferrand (FR)**
- **DAUDE, Hélène**
  **F-63000 Clermont-Ferrand (FR)**

(74) Mandataire: **Cohen, Sylvia**
**Michelin & Cie,**
**Service SGD/LG/PI-LAD**
**63040 Clermont-Ferrand Cedex 09 (FR)**

(56) Documents cités:
**GB-A- 1 090 207** **US-A- 5 543 469**
**US-A- 5 569 718** **US-A- 6 147 152**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 527 113 B1

## Description

La présente invention concerne une composition de caoutchouc utilisable pour faire adhérer à l'état réticulé une première composition de caoutchouc, comprenant un terpolymère d'éthylène, de propylène et d'un diène, à une seconde composition de caoutchouc, à base d'au moins un élastomère diénique dont le taux molaire d'unités issues de diènes conjugués est supérieur à 50 %. L'invention concerne également un profilé ou gomme de liaison utilisable pour faire adhérer, à l'état réticulé, une nappe de carcasse d'une enveloppe de pneumatique comprenant ladite seconde composition à une couche externe constituée de ladite première composition et délimitant axialement vers l'extérieur un flanc de ladite enveloppe, une telle enveloppe de pneumatique comportant ce profilé de liaison, et un procédé de fabrication de cette enveloppe.

Une enveloppe de pneumatique comporte usuellement un sommet prolongé par deux flancs se terminant respectivement par deux bourrelets et une nappe de carcasse ancrée dans ces bourrelets, chaque flanc étant délimité axialement vers l'extérieur par une couche externe recouvrant la nappe de carcasse.

La nappe de carcasse est classiquement constituée d'une composition de caoutchouc qui est renforcée par des renforts textiles ou métalliques et qui est à base d'élastomères diéniques comprenant chacun un taux molaire d'unités issues de diènes conjugués supérieur à 50 % (de tels élastomères diéniques sont communément appelés « fortement insaturés »), tels que du polyisoprène naturel ou de synthèse, du polybutadiène et/ou un copolymère de styrène et de butadiène.

Quant à la couche externe pour les flancs, elle est généralement constituée d'une composition de caoutchouc comprenant majoritairement ces élastomères diéniques « fortement insaturés », par exemple un coupage de caoutchouc naturel et de polybutadiène. De manière connue, cette composition pour couche externe de flancs comprend en outre au moins un agent anti-ozonant destiné à réduire la formation et la propagation de craquelures sous des sollicitations statiques et dynamiques prolongées en présence d'ozone, ainsi que des cires, destinées à former un revêtement protecteur à la surface des flancs de sorte à assurer une protection complémentaire sous des sollicitations statiques.

L'association de ces agents anti-ozonants et de ces cires a prouvé son efficacité pour la minimisation des craquelures à la surface des flancs. Malheureusement, les agents anti-ozonants les plus efficaces se caractérisent aussi par une très forte aptitude à migrer à travers le substrat élastomère et à venir tacher et colorer en jaune ou marron les faces externes des flancs. Ce phénomène est connu sous le nom de « tachage ».

On a cherché à minimiser ce phénomène en utilisant, dans ces compositions pour couches externes de flancs, d'autres matrices élastomères prévues pour conférer à ces compositions une résistance accrue à l'ozone et, par conséquent, susceptibles de réduire la quantité d'agent anti-ozonant nécessaire et donc les effets indésirables précités dus à sa migration.

On a ainsi pensé à incorporer en quantité majoritaire, dans ces matrices élastomères pour couches externes de flancs, des élastomères dont le taux molaire d'unités issues de diènes est inférieur à 15 % (ces élastomères sont communément appelés « essentiellement saturés »), tels que des terpolymères d'éthylène, de propylène et d'un diène (ces terpolymères sont appelés « EPDM » en abrégé), qui sont connus pour conférer aux compositions de caoutchouc les incorporant une résistance accrue non seulement à l'ozone mais encore aux rayonnements ultraviolets.

Un inconvénient majeur de ces compositions pour couches externes de flancs dont la matrice élastomère incorpore majoritairement ces EPDM réside dans l'incompatibilité thermodynamique de ces derniers avec les élastomères « fortement insaturés » de la nappe de carcasse en contact direct avec chaque couche externe. L'expérience montre que cette incompatibilité est à l'origine d'une adhésion insatisfaisante entre la nappe carcasse et chaque couche externe adjacente, ce qui conduit à réduire d'une manière significative la fraction relative d'EPDM dans la matrice élastomère pour ne pas pénaliser cette adhésion.

C'est la raison pour laquelle on a généralement choisi d'incorporer en quantité minoritaire seulement (i. e. selon une fraction massique inférieure à 50 %) ces EPDM dans les matrices élastomères de compositions pour couches externes de flancs, en comparaison des élastomères « fortement insaturés » de type NR ou BR présents en quantité majoritaire. Il en résulte une limitation de la résistance à l'ozone de ces compositions procurée par la matrice élastomère, qui s'accompagne de la nécessité de prévoir un agent anti-ozonant en quantité relativement élevée.

Le but de la présente invention est de remédier à ces inconvénients, et il est atteint en ce que les demanderesses viennent de découvrir d'une manière surprenante qu'une composition de caoutchouc de liaison réticulable ou réticulée qui est à base d'au moins un élastomère diénique hydrogéné à blocs, de masse moléculaire moyenne en nombre supérieure à 20 000 g/mol et comportant, d'une part, un bloc polybutadiène dans lequel le taux d'unités butadiène hydrogénées est égal ou supérieur à 60 % et, d'autre part, un bloc polyisoprène, permet de faire adhérer d'une manière satisfaisante, à l'état réticulé, une première composition de caoutchouc comprenant spécifiquement un élastomère EPDM à titre d'élastomère « essentiellement saturé », à une seconde composition de caoutchouc à base d'au moins un élastomère diénique « fortement insaturé », tel que du caoutchouc naturel, et cela même dans le cas où la matrice élastomère de cette première composition de caoutchouc est à base dudit EPDM (i.e. ladite matrice comprend cet EPDM selon une fraction massique supérieure à 50 %, pouvant aller jusqu'à 100 %).

Par définition, on entend de manière connue par élastomère « diénique » un élastomère issu au moins en partie (i.e. un homopolymère ou un copolymère) de monomères diènes (monomères porteurs de deux doubles liaisons carbone-carbone, conjuguées ou non).

On entend par élastomère diénique "essentiellement insaturé" un élastomère diénique issu au moins en partie de monomères diènes conjugués, ayant un taux molaire d'unités issues de diènes conjugués qui est supérieur à 15 %.

C'est ainsi que des copolymères éthylène/ propylène (EPM) ou des terpolymères éthylène/ propylène/ diène (EPDM), des caoutchoucs butyl (copolymères isoprène/isobutylène, appelés IIR), des caoutchoucs halobutyl tels que des caoutchoucs bromobutyl (BIIR) ou des caoutchoucs chlorobutyl (CIIR), n'entrent pas dans la définition précédente, car ils peuvent être qualifiés d'élastomères "essentiellement saturés" (le taux d'unités issues de diènes étant nul ou très réduit, toujours inférieur à 15 %).

Dans la catégorie des élastomères diéniques "essentiellement insaturés", on entend en particulier par élastomère diénique "fortement insaturé" un élastomère diénique ayant un taux molaire d'unités issues de diènes conjugués qui est supérieur à 50 %, tel que le caoutchouc naturel, les polyisoprènes de synthèse (IR), les polybutadiènes (BR), les copolymères styrène/butadiène (SBR), les copolymères butadiène/ isoprène (BIR), les copolymères styrène/isoprène (SIR), ou encore les copolymères styrène/ butadiène/ isoprène (SBIR).

On notera que cette composition de liaison permet d'utiliser, à titre de composition pour couches externes de flancs, cette première composition de caoutchouc dont la matrice élastomère incorpore en majorité ou en totalité un élastomère EPDM, tout en procurant une adhésion améliorée entre les deux couches externes de flancs et la nappe de carcasse. Il résulte de cette présence en quantité majoritaire ou totale de cet EPDM que la résistance à l'ozone et aux rayonnements ultraviolets de la composition pour couches externes de flancs est augmentée d'une manière significative par rapport à celle de compositions connues comprenant des agents anti-ozonants.

Il en découle notamment que la composition de liaison selon l'invention permet d'utiliser des quantités réduites d'agent anti-ozonant ou même de se passer d'un tel agent, par rapport à l'état de l'art dans les compositions pour couches externes de flancs, pour l'obtention d'une résistance à l'ozone donnée, ce qui minimise le phénomène de « tachage » des flancs précité.

De préférence, ledit élastomère diénique hydrogéné est un copolymère à deux blocs, étant constitué dudit bloc polybutadiène dans lequel le taux d'unités butadiène hydrogénées est égal ou supérieur à 60 %, et dudit bloc polyisoprène.

Selon une caractéristique préférentielle de l'invention, ladite composition de liaison comprend une matrice élastomère qui est constituée dudit élastomère diénique hydrogéné.

Selon une autre caractéristique de l'invention, ladite composition de liaison comprend un système de réticulation comprenant au moins un peroxyde organique qui est destiné à la réticulation desdites unités butadiène hydrogénées.

Selon un exemple de réalisation de l'invention, ledit système de réticulation comprend en outre du soufre.

Selon un autre exemple de réalisation de l'invention, ledit système de réticulation est constitué dudit ou desdits peroxydes organiques.

Selon une caractéristique préférentielle de l'invention, ledit bloc polybutadiène comporte des unités butadiène hydrogénées selon un taux égal ou supérieur à 70 % et, à titre encore plus préférentiel, selon un taux égal ou supérieur à 80 %.

Quant audit bloc polyisoprène, il comporte des unités isoprène hydrogénées selon un taux inférieur à 15 %.

Selon une autre caractéristique préférentielle de l'invention, la fraction massique dudit bloc polybutadiène dans ledit élastomère diénique hydrogéné est égale ou supérieure à 40 % et inférieure ou égale à 60 %, celle dudit bloc polyisoprène étant inférieure ou égale à 60 % et égale ou supérieure à 40 %.

Selon une autre caractéristique préférentielle de l'invention, dans ledit élastomère diénique, ledit bloc polybutadiène comprend un taux d'unités 1,2 compris entre 40 % et 60 %.

Selon une autre caractéristique préférentielle de l'invention, dans ledit élastomère diénique, ledit bloc polyisoprène comprend un taux d'unités 3,4 compris entre 5 % et 15 %.

Avantageusement, dans le but de faire adhérer d'une manière satisfaisante, à l'état réticulé, une couche externe circonférentielle d'un flanc d'enveloppe de pneumatique à la partie en regard d'une nappe de carcasse de ladite enveloppe qui est ancrée dans ledit flanc, la masse moléculaire moyenne en nombre dudit élastomère diénique hydrogéné est comprise entre 50 000 g/mol et 200 000 g/mol et, à titre encore plus avantageux, entre 80 000 g/mol et 150 000 g/mol.

Egalement à titre avantageux, ledit élastomère diénique hydrogéné présente un indice de polymolécularité inférieur à 2.

Selon un mode particulièrement avantageux de réalisation de l'invention, ledit élastomère diénique hydrogéné est le produit de la réaction d'hydrogénation dudit élastomère diénique à blocs, susceptible d'être obtenu par polymérisation anionique en solution, et d'un catalyseur d'hydrogénation à base de cobalt, tel que l'octoate de cobalt.

Plus précisément, ledit élastomère diénique à blocs est par exemple obtenu, dans une première étape, par synthèse d'un polybutadiène lithié (i.e. « vivant ») à l'une de ses extrémités de chaîne obtenu au moyen d'un initiateur lithié, puis, dans une seconde étape, par polymérisation de l'isoprène initiée par ce polybutadiène « vivant ».

Selon une variante de réalisation de l'invention, ledit élastomère diénique à blocs est obtenu, dans une première

étape, par synthèse d'un polyisoprène lithié à l'une de ses extrémités de chaîne obtenu au moyen d'un initiateur lithié, puis, dans une seconde étape, par polymérisation du butadiène initiée par ce polyisoprène « vivant ».

Selon une autre caractéristique préférentielle de l'invention, ladite composition de liaison comprend, selon une quantité allant de 30 à 60 pce, une charge renforçante comprenant une charge inorganique renforçante et/ou du noir de carbone. (pce : parties en poids pour cent parties d'élastomère(s)).

Cette charge renforçante comprend par exemple une charge inorganique renforçante à titre majoritaire (c'est-à-dire selon une fraction massique supérieure à 50 %).

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Préférentiellement, la charge inorganique renforçante est, en totalité ou tout du moins majoritairement, de la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, même si les silices précipitées hautement dispersibles sont préférées.

Dans le présent exposé, la surface spécifique BET est déterminée de manière connue, selon la méthode de Brunauer-Emmett-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV 3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans le document de brevet EP-A-735088.

On notera que la charge renforçante d'une composition de caoutchouc selon l'invention peut contenir en coupage, en plus de la ou des charges inorganiques renforçantes précitées, du noir de carbone à titre minoritaire (c'est-à-dire selon une fraction massique inférieure à 50 %). Comme noirs de carbone conviennent tous les noirs de carbone, notamment les noirs du type HAF, ISAF, SAF, conventionnellement utilisés dans les pneumatiques. A titre d'exemples non limitatifs de tels noirs, on peut citer les noirs N115, N134, N234, N339, N347, N375.

Par exemple, les coupages noir/ silice ou les noirs partiellement ou intégralement recouverts de silice conviennent pour constituer la charge renforçante.

Conviennent également à titre de charge inorganique renforçante les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

Selon un autre exemple de réalisation de la composition de l'invention, ladite charge renforçante comprend, à titre majoritaire, du noir de carbone.

A titre de noir de carbone, conviennent tous les noirs précités qui sont commercialement disponibles ou conventionnellement utilisés dans les pneumatiques, ainsi que les coupages noir/silice, les noirs de carbone partiellement ou intégralement recouverts de silice, ou lesdits noirs de carbone modifiés par de la silice.

Selon une variante de réalisation de l'invention, ladite charge renforçante comprend un coupage de 50 % de charge inorganique renforçante et de 50 % noir de carbone.

Il est bien connu de l'homme du métier qu'il est nécessaire d'utiliser, pour une charge inorganique renforçante telle que par exemple une silice ou une alumine renforçante, un agent de couplage (charge inorganique/ élastomère), encore appelé agent de liaison, qui a pour fonction d'assurer la liaison ou "couplage" entre la charge inorganique et l'élastomère, tout en facilitant la dispersion de cette charge inorganique au sein de la matrice élastomère.

Un tel agent de couplage, au moins bifonctionnel, a par exemple comme formule générale simplifiée "Y-T-X ", dans laquelle:

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;

- T représente un groupe permettant de relier Y et X.

On peut utiliser par exemple des organosilanes, notamment des alkoxysilanes polysulfurés ou des mercaptosilanes, ou encore des polyorganosiloxanes porteurs des fonctions X et Y précitées.

Les agents de couplage silice/élastomère les plus connus sont des alkoxysilanes bifonctionnels tels que des alkoxysilanes polysulfurés, dits "symétriques" ou "asymétriques" selon leur structure particulière. On citera plus particulièrement les polysulfures (notamment les disulfures, trisulfures ou tétrasulfures) de bis-(alkoxyl($C_1$-$C_4$)-alkyl($C_1$-$C_4$) silylalkyl($C_1$-$C_4$)), comme par exemple les polysulfures de bis(3-triméthoxysilylpropyl) ou de bis(3-triéthoxysilylpropyl). Parmi ces composés, on utilise notamment le tétrasulfure de bis(3-triéthoxysilylpropyl), en abrégé TESPT, de formule $[(C_2H_5O)_3Si(CH_2)_3S_2]_2$ ou le disulfure de bis(triéthoxysilylpropyle), en abrégé TESPD, de formule $[(C_2H_{5O})_3Si(CH_2)_3S]_2$. Le TESPD est commercialisé par exemple par la société Degussa sous les dénominations Si266 ou Si75 (dans le second cas, sous forme d'un mélange de disulfure (à 75% en poids) et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4). On citera également les monoalcoxysilanes tétrasulfurés, tels que le tétrasulfure de monoéthoxydiméthylsilylpropyle (en abrégé MESPT), qui font l'objet de la demande de brevet international PCT/EP02/03774 au nom des demanderesses.

Les compositions conformes à l'invention contiennent, outre ladite matrice élastomère, ledit système de réticulation, des accélérateurs de réticulation, ladite charge renforçante et éventuellement un ou des agents de liaison charge inorganique renforçante/ élastomère, tout ou partie des autres constituants et additifs habituellement utilisés dans les mélanges de caoutchouc, comme des plastifiants, pigments, antioxydants, cires anti-ozonantes, des huiles d'extension, un ou des agents de recouvrement de la charge inorganique renforçante éventuellement utilisée, tels que des alcoxysilanes, polyols, amines, etc...

Selon une autre caractéristique préférentielle de l'invention, ladite composition de liaison présente, à l'état réticulé et mesuré selon la norme ASTM D 412, un module sécant apparent MAS10 à 10 % de déformation qui est compris entre 2 et 6 MPa.

Un profilé de liaison selon l'invention (également appelé « gomme de liaison » par l'homme de l'art) est utilisable pour faire adhérer, à l'état réticulé, ladite couche externe circonférentielle à la partie en regard de ladite nappe de carcasse, ladite couche externe étant constituée de ladite première composition de caoutchouc et ladite nappe de carcasse comprenant ladite seconde composition de caoutchouc.

Ce profilé de liaison est constitué de ladite composition de caoutchouc de liaison selon la présente invention définie ci-dessus.

Selon une caractéristique préférentielle de l'invention, ledit profilé présente une épaisseur inférieure ou égale à 1 mm et, à titre encore plus préférentiel, comprise entre 0,1 mm et 0,5 mm.

Une enveloppe de pneumatique selon l'invention comporte un sommet prolongé par deux flancs se terminant respectivement par deux bourrelets et une nappe de carcasse ancrée dans ces bourrelets, chaque flanc étant délimité axialement vers l'extérieur par au moins une couche externe solidarisée à ladite nappe par un profilé de liaison sensiblement en forme de couronne circulaire, ladite couche externe étant constituée d'une première composition de caoutchouc comprenant un élastomère EPDM, ladite nappe de carcasse comprenant une seconde composition de caoutchouc à base d'au moins un élastomère diénique dont le taux molaire d'unités issues de diènes conjugués est supérieur à 50 %.

Cette enveloppe selon l'invention est telle que ledit profilé de liaison présente les caractéristiques énoncées ci-dessus.

Selon une caractéristique préférentielle de l'invention, la matrice élastomère de ladite première composition de caoutchouc pour couche externe comprend :

- selon une fraction massique allant de 20 % à 100 % et de préférence allant de 60 % à 80 %, ledit élastomère EPDM, et
- selon une fraction massique allant de 80 % à 0 % et de préférence allant de 40 % à 20 %, au moins un élastomère diénique dont le taux molaire d'unités issues de diènes conjugués est supérieur à 50 %.

Selon un exemple de réalisation de l'invention, ladite enveloppe de pneumatique est telle que cette première composition de caoutchouc comprend du caoutchouc naturel et à titre optionnel un polybutadiène, à titre d'élastomère (s) diénique(s) dont le taux molaire d'unités issues de diènes conjugués est supérieur à 50 %.

Selon une autre caractéristique préférentielle de l'invention, ladite enveloppe de pneumatique est telle que la matrice élastomère de ladite seconde composition de caoutchouc pour nappe de carcasse comprend du caoutchouc naturel, un polybutadiène et un copolymère de styrène/ butadiène.

Une enveloppe de pneumatique selon l'invention est avantageusement fabriquée en mettant en oeuvre le procédé comprenant les étapes suivantes :

(i) la préparation par malaxage de compositions de caoutchouc réticulables incluant ladite première composition pour couche externe, ladite seconde composition pour nappe de carcasse et ladite composition de liaison pour ledit profilé de liaison,
(ii) le façonnage de ladite couche externe et dudit profilé de liaison,
(iii) la confection d'une ébauche d'enveloppe réticulable dans laquelle ledit profilé de liaison est mis en contact par ses faces respectives avec ladite couche externe et avec ladite nappe de carcasse, et
(iv) la cuisson de l'ébauche dans un moule pour obtenir ladite enveloppe réticulée.

Ce procédé selon l'invention est tel que dans ladite étape (i), on prépare ladite composition de liaison par malaxage d'un élastomère diénique hydrogéné à blocs, de masse moléculaire moyenne en nombre supérieure à 20 000 g/mol, comportant un bloc polybutadiène dans lequel le taux d'unités butadiène hydrogénées est égal ou supérieur à 60 % et un bloc polyisoprène, avec des additifs utilisés dans la fabrication de pneumatiques comprenant notamment un système de réticulation et une charge renforçante.

De préférence, dans ladite étape (ii), on façonne par extrusion ledit profilé de liaison au moyen d'un dispositif d'extrusion qui comprend un rouleau rotatif, un orifice d'entrée de ladite composition de liaison et une voûte recouvrant circonférentiellement et partiellement la surface extérieure dudit rouleau, ladite composition de liaison étant refoulée à partir dudit orifice d'entrée dans l'entrefer situé entre ladite voûte et ledit rouleau vers un orifice d'extrusion définissant le profil dudit profilé de liaison, délimité par une paroi qui coopère avec ladite surface extérieure, ladite voûte portant sur sa surface intérieure orientée vers ledit rouleau des filets saillants afin de délimiter avec ladite surface extérieure une chambre de plastification de ladite composition de liaison, deux aux moins desdits filets s'étendant sensiblement axialement.

On se reportera à l'intégralité du document de brevet international WO-A-02/42053 au nom des demanderesses, pour une description détaillée dudit dispositif d'extrusion.

L'orifice d'extrusion s'étend ainsi dans la direction axiale, direction de l'axe du rouleau qui réalise avec la voûte un travail de plastification efficace de la composition de liaison, ce qui permet l'obtention d'un profilé large avec un encombrement limité du dispositif correspondant à la longueur du rouleau.

Avantageusement, les deux filets s'étendant sensiblement axialement sont constitués par les filets situés le plus près de l'orifice d'extrusion, ce qui permet d'assurer notamment la direction et la répartition de la composition de liaison vers l'orifice d'extrusion.

On peut également prévoir que la zone de la voûte formant la chambre de plastification sera délimitée transversalement par deux bords de réception des fuites de composition de liaison, ce qui permet de maîtriser la largeur du profilé extrudé. Ces systèmes de réception des fuites peuvent être équipés des dispositifs d'étanchéité classiques.

Selon une variante de réalisation de l'invention, la zone de la voûte formant la chambre de plastification est divisée en secteurs, deux secteurs consécutifs étant séparés par des filets saillants parallèles entre eux, s'étendant sensiblement axialement.

Selon une autre variante, la zone de la voûte formant la chambre de plastification présente des filets hélicoïdaux, ayant par exemple sur un même filet un pas à gauche puis à droite ou inversement.

Avantageusement, la paroi est constituée par une lame fixe qui porte une alvéole s'étendant sensiblement axialement et séparée du dernier secteur de la voûte, en position fermée du dispositif, par un filet s'étendant sensiblement axialement et porté par ladite voûte, l'alvéole de la lame présentant une longueur axiale supérieure à celle dudit filet. La création de cette divergence à la fin du parcours de la composition de liaison permet à celle-ci de se répartir sur l'ensemble de la longueur de l'alvéole et garantit ainsi la constance de l'épaisseur et de la largeur du profilé sans générer de bavures, en récupérant les fuites latérales éventuelles.

Les caractéristiques précitées de la présente invention, ainsi que d'autres, seront mieux comprises à la lecture de la description suivante d'un exemple de réalisation de l'invention, donné à titre illustratif et non limitatif, ladite description étant réalisée en relation avec le dessin joint, dans lequel :

La Fig. unique est une vue schématique en coupe méridienne d'une moitié d'enveloppe de pneumatique selon l'invention (i.e. selon un plan de coupe axial, perpendiculaire au plan circonférentiel médian de ladite enveloppe).

L'enveloppe 1 représentée à la Fig. unique comporte de manière connue une armature de sommet 2 qui est surmontée par une bande de roulement 3 et qui est prolongée par deux flancs 4 (un seul est visible à la Fig. unique) se terminant chacun par un bourrelet 5 renforcé par une tringle 6. Cette enveloppe 1 comporte également une nappe de carcasse 7 ancrée dans chaque bourrelet 5.

Chaque flanc 4 est délimité axialement vers l'extérieur (i.e. dans la direction axiale de l'enveloppe 1) par une même couche externe 8, laquelle est solidarisée à la nappe de carcasse 7 par un profilé de liaison 9 circonférentiel. Comme on peut le voir à la Fig. unique, chacun des deux profilés de liaison 9 présente dans l'enveloppe 1 une forme de couronne circulaire présentant une concavité tournée vers l'intérieur de ladite enveloppe 1.

Dans l'exemple de réalisation de la Fig. unique, chaque profilé 9 recouvre, par l'une de ses faces 9a axialement externe, la totalité de la couche externe 8 sur toute la circonférence de l'enveloppe 1 et il recouvre successivement, par

son autre face 9b axialement interne, de son extrémité 9c radialement inférieure à son extrémité 9d radialement supérieure :

- la zone basse 10 de l'enveloppe 1 se terminant par le bourrelet 5,
- une partie de la nappe de carcasse 7 dont il épouse la concavité dans la partie radialement médiane du flanc 4,
- le bord latéral en regard 2a de l'armature de sommet 2, et
- le bord latéral en regard 3a de la bande de roulement 3 prolongeant radialement vers le haut ledit bord 2a.

Chaque profilé 8 ou « gomme de liaison » a été extrudé au moyen du dispositif d'extrusion précité qui a fait l'objet du document de brevet international WO-A-02/42053 et, dans l'exemple de réalisation qui suit, son épaisseur est sensiblement égale à 0,3 mm.

Chacun des deux profilés de liaison 9 est constitué d'une même composition de caoutchouc (composition de liaison ci-après) présentant la formulation suivante:

(pce : parties en poids pour cent parties d'élastomère)

- élastomère diénique hydrogéné à blocs 100
- silice Zeosil 1115 MP 40
- agent de couplage Si69 3
- acide stéarique 1
- ZnO 4
- DCBS 0,7
- soufre 1,2
- peroxyde « TBIPB40 » 2,8

avec DCBS : accélérateur de réticulation = 2-dicyclohexyl-benzothiazyl-sulfénamide ; et « TBIPB40 »=$\alpha$,$\alpha$' di (t-butyl-peroxy)-m/p-diisopropylbenzène, de formule $(CH_3)_3C\text{-}OO\text{-}C(CH_3)_2\text{-}C_5H_4\text{-}C(CH_3)_2\text{-}OO\text{-}C(CH_3)_3$.

L'élastomère diénique hydrogéné à blocs comporte un bloc polybutadiène et un bloc polyisoprène, et il a été préparé de la manière suivante.

<u>Synthèse de l'élastomère à deux blocs</u> :

On introduit, dans un réacteur préalablement rendu inerte, 57,689 litres de cyclohexane, 2,973 kg de butadiène et 0,301 litre de tétrahydrofurfuryl éther à 0,095 mol/l dans le cyclohexane. Cette solution est chauffée à 50° C. On ajoute ensuite 0,713 litre de butyllithium (BuLi) à 0,0642 mol/l dans le cyclohexane.

La polymérisation dure 60 minutes. On obtient 96 % de taux de conversion. La solution de polymère est ensuite dégazée. On ajoute 0,503 ml d'une solution de $AlLi(Et)_3Bu$ à 0,091 mol/l dans le toluène.

On ajoute enfin 2,973 kg d'isoprène. La polymérisation dure 40 minutes. Le taux de conversion final est de 95 % par rapport à l'isoprène. Le polymère est stoppé par ajout de 0,22 litre de méthanol à 0,25 mole/l dans le cyclohexane.

La composition de l'élastomère à blocs obtenu est déterminée par RMN $^1H$.

La fraction massique du bloc polybutadiène dans l'élastomère est de 55 %, celle du bloc polyisoprène étant de 45 %.

Le taux d'unités 1,2 dans le bloc polybutadiène est de 51 % et le taux d'unités 3,4 dans le bloc polyisoprène est de 13 %.

<u>Synthèse du catalyseur d'hydrogénation</u> :

On introduit, dans un réacteur préalablement rendu inerte, 9,63 moles de butyl lithium en solution environ molaire dans le cyclohexane ainsi que 9 066 ml de cyclohexane.

On injecte ensuite 117,8 g d'octoate de cobalt. Ce composé est en solution à environ 12 % dans le cyclohexane. Cette addition dure une heure et est exothermique. La température de réaction est de 30° C. L'agitation est poursuivie une heure après la fin de l'addition. Le titre en cobalt du catalyseur final est de 0,117 mol/l.

<u>Hydrogénation</u> :

L'hydrogénation est réalisée dans le réacteur de polymérisation à une température de 50° C. La solution d'élastomère est barbotée pendant 15 minutes à l'azote puis pendant 3 minutes à l'hydrogène. 2,353 litres du catalyseur précédemment obtenu sont introduits dans le réacteur qui est ensuite mis sous une pression de 4,9 bars d'hydrogène.

Une nouvelle injection de 1,410 1 de catalyseur est réalisée après 1 heure et 30 minutes d'hydrogénation. Après 1 heure et 55 minutes, la solution d'élastomère est traitée par 0,2 pce d'un agent anti-oxydant de dénomination « BPH ». Elle est ensuite strippée en milieu acide. Le pH de fin de stripping est égal à 3. L'élastomère hydrogéné obtenu est séché en étuve sous vide d'azote à 50° C.

La composition de l'élastomère hydrogéné est déterminée par RMN $^1H$. Cet élastomère est hydrogéné à 84 % dans le bloc polybutadiène et à 2% dans le bloc polyisoprène.

Sa température de transition vitreuse est de -63° C avec un $\Delta T$ de 6° C.

Cet élastomère à blocs hydrogéné présente les caractéristiques suivantes de microstructure et de macrostructure.

Tableau 1 :

| Elastomère à blocs avant hydrogénation | |
|---|---|
| Taux de polybutadiène dans l'élastomère | 55% |
| Taux unités butadiène 1,2 dans polybutadiène | 51% |
| Taux de polyisoprène dans l'élastomère | 45% |
| Taux unités isoprène 3,4 dans polyisoprène | 13% |
| Masse moléculaire Mn (technique SEC) | 90 085 g/mol |
| Masse moléculaire Mw (technique SEC) | 107 200 g/mol |
| Indice de polydispersité Ip = Mw / Mn | 1,19 |
| **Elastomère à blocs hydrogéné** | |
| Masse moléculaire Mn (technique SEC) | 100 105 g/mol |
| Masse moléculaire Mw (technique SEC) | 151 100 g/mol |
| Indice de polydispersité Ip = Mw /Mn | 1,51 |
| Taux d'unités butadiène hydrogénées | 84% |
| Taux d'unités isoprène hydrogénées | 2% |
| Taux d'insoluble sur grille | <0,3% |
| Température de transition vitreuse Tg ($\Delta T$) | -63 / 6 |
| Densité de l'èlàstomère hydrogéné | 0,890 |

On se reportera respectivement aux annexes 1 et 2 jointes pour une description des techniques utilisées pour déterminer la microstructure (technique RMN $^1H$) et la macrostructure (technique SEC) de ces élastomères.

Chaque composition de caoutchouc de liaison à base de cet élastomère diénique hydrogéné à blocs présente les propriétés suivantes (on se reportera à l'annexe 3 jointe pour une description des mesures de ces propriétés) :

Tableau 2 :

| Propriétés à l'état non réticulé | |
|---|---|
| Mooney ML(1+4) à 100° C | 29,8 |
| **Propriétés de rhéométrie** | |
| k | 0,206 |
| $t_i$ | 2,38 |
| $t_{90}$ | 13,51 |
| $t_{95}$ | 16,86 |
| $t_{99}$ | 24,64 |
| $C_{min}$ | 0,6 |

(suite)

| Propriétés de rhéométrie | |
|---|---|
| $C_{max}$ | 14,37 |
| **Propriétés à l'état réticulé** | |
| Rupture Scott à 23° C<br>- déformation (%)<br>- contrainte (MPa) | <br>453<br>11;34 |
| Pertes hystérétiques à 60° C<br>- pertes (%)<br>- déformation (%) | <br>29,4<br>49 |
| Modules sécants apparents MAS à 23° C<br>- MAS10 (10 % de déformation)<br>- MAS 100 (100% de déformation)<br>- MAS300 (300 % de déformation) | <br>4,75<br>1,75<br>1,72 |

Chacune des deux couches externes de flancs 8 est constituée d'une même composition de caoutchouc présentant la formulation suivante :

(pce : parties en poids pour cent parties d'élastomères)

- EPDM (contenant 5% d'insaturations) 55
- Caoutchouc naturel 45
- silice Zeosil 1115 MP 40
- agent de couplage Si69 3
- huile paraffinique 20
- acide stéarique 1
- ZnO 4
- DCBS 0,7
- soufre 1,2
- peroxyde « TBIPB40 » 2,8

La composition de caoutchouc de la nappe de carcasse 7 présente la formulation suivante :

- Caoutchouc naturel 55
- Polybutadiène 20
- Copolymère styrène-butadiène 25
- noir de carbone 42
- huile aromatique 15
- acide stéarique 1
- ZnO 3
- Soufre 2,2
- CBS 0,9

avec CBS = accélérateur de réticulation : N-cyclohexyl-2-benzothiazylsulfénamide.

Afin de mettre en évidence les caractéristiques avantageuses d'adhésion procurées par la composition de liaison selon l'invention, on a procédé à trois tests « de pelage » selon la norme ASTM D 1876 de 1995.

Dans chacun de ces tests, on a mesuré la force de séparation nécessaire pour séparer progressivement à 180° (i.e. séparation en « T ») et à 23° C deux plaques l'une de l'autre, et l'on a caractérisé à l'issue de chaque test la séparation obtenue. On se reportera à l'annexe 4 jointe pour une description détaillée de ces tests.

Un premier test « témoin » a caractérisé l'adhésion entre deux plaques réticulées respectivement constituées de la composition précitée de couche externe de flanc et de la composition précitée de nappe de carcasse (aucune composition de liaison n'étant appliquée entre ces deux compositions).

Un second test selon l'invention a caractérisé l'adhésion entre deux plaques réticulées respectivement constituées de la composition précitée de liaison et de ladite composition de nappe de carcasse.

Un troisième test selon l'invention a caractérisé l'adhésion entre deux plaques réticulées respectivement constituées de ladite composition de liaison et de ladite composition de couche externe de flanc.

Le tableau 3 ci-après contient les résultats obtenus.

Tableau 3 :

| | Test d'adhésion « témoin » (couche externe/ carcasse) | Test d'adhésion (liaison/ carcasse) | Test d'adhésion (liaison/ couche externe) |
|---|---|---|---|
| Force de séparation (N/mm) | 5 | 24 | 22 |
| Aspect | Rupture interfaciale | Clivage | Clivage |

Ces résultats montrent, en premier lieu, que l'adhésion de la couche externe de flanc à la nappe de carcasse (sans profilé de liaison entre ces deux couches) n'est pas du tout satisfaisante, étant donné que la force réduite de 5 N/mm provoquant la rupture interfaciale peut être obtenue par simple séparation manuelle.

Ces résultats montrent, en second lieu, que l'incorporation d'un profilé de liaison à l'interface de la couche externe de flanc et de la nappe de carcasse permet d'atteindre des forces de « pelage » suffisamment élevées (du fait qu'elles sont supérieures à 15 N/mm) entre ce profilé, cette couche externe et cette nappe de carcasse, pour l'obtention d'un faciès de séparation non lisse, ce qui témoigne d'une adhésion satisfaisante entre ladite couche externe et ladite nappe de carcasse.

On notera que la composition de liaison adhère à la composition de couche externe et à la nappe de carcasse dans des conditions analogues, du fait que les forces de « pelage » mesurées sont du même ordre de grandeur.

**ANNEXE 1: Détermination de la microstructure des élastomères à blocs obtenus.**

**Conditions analytiques :**

Solubilisation dans C6D6/C2C14 (volume/volume) en température à 60° C, spectre 1H réalisé sur « Bruker AC200 » en température 60° C.

(ns=64, séquence d'impulsion zg, d1=1s)
Calibration : impureté protonée du C6D6 = 7,15 ppm
Ces conditions s'appliquent aux copolymères hydrogénés et non hydrogénés.

**Analyse RMN $^{1}$H du copolymère avant hydrogénation :**

Il est nécessaire de déterminer la composition exacte du copolymère avant son hydrogénation. Ceci permet par la suite de calculer, de façon simple et uniquement avec le spectre RMN $^{1}$H, le taux d'hydrogénation du copolymère.

Dans les copolymères synthétisés, le butadiène s'insère sous la forme (1,4) ou sous la forme (1,2). L'isoprène s'insère sous la forme (1,4) ou sous la forme (3,4). Le schéma ci-après décrit ces modes d'insertion et nomme les différents protons.

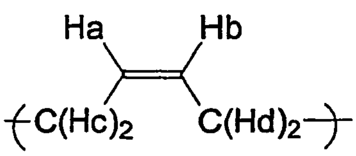

PB (1,4)

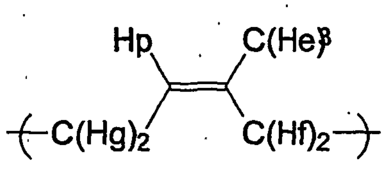

PI(1,4)

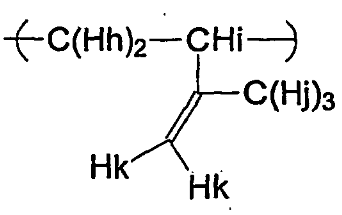

PI (3,4)

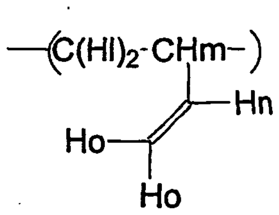

PB(1,2)

Le spectre RMN $^1$H nous donne une signature caractéristique de ces motifs dont l'attribution est reportée ci-dessous.

| δ (ppm) | Attributions | Intégrale de l'aire du pic |
|---|---|---|
| 5.60 - 5.25 | Ha, Hb, Hn | α |
| 5.25 - 5.00 | Hp | β |
| 5.00 - 4.85 | 2Ho | γ |
| 4.85 - 4.60 | 2Hk | δ |
| 2.60 - 0.40 | Zone aliphatique (2Hc, 2Hd, 2Hg, 2Hf, 3He, 2Hh, Hi, 3Hj, 2Hl, Hm + extrémités de chaînes saturées (négligeables)) | |

L'analyse du spectre du copolymère non hydrogéné permet d'obtenir les fractions molaires a, b, c, d des motifs insérés respectivement sous les formes PB(1,4), PB(1,2), PI(1,4), et PI(3,4), grâce au calcul ci-après (PB pour polybutadiène et PI pour polyisoprène) :

$PB(1,4)=a=0,5*(\alpha-\gamma/2)/\ [\beta+0.5*(\delta+\alpha+\gamma/2)]$
$PB(1,9-)=b-\gamma/2/[\beta+0.5*(\delta+\alpha+\gamma/2)]$
$PI(1,4)=c=\beta/[\beta+0.5*(\delta+\alpha+\gamma/2)]$
$PI(3,4)=d=\delta/2/[\beta+0.5*(\delta+\alpha+\gamma/2)]$

On peut donc simplement déterminer la composition du copolymère initial.

**Méthode de calcul pour les copolymères hydrogénés :**

L'hydrogénation conduit à la disparition ou à la diminution des protons éthyléniques (Ha, Hb, Hp, Hk, Ho, Hn). En contre partie, la contribution de la zone aliphatique augmente. Le copolymère synthétisé comporte donc des motifs hydrogénés et des motifs non hydrogénés. Le tableau ci-après donne la contribution des motifs non hydrogénés et hydrogénés. C'est une description de ce copolymère qui simplifiera l'écriture du calcul.

**Tableau I :**

| Type de motifs | Motifs non hydrogénés | | Motifs hydrogénés | |
|---|---|---|---|---|
| | Nombre de motifs* | Nombre de protons du motif résonnant dans la zone aliphatique* | Nombre de motifs* | Nombre de protons du motif résonnant dans la zone aliphatique* |
| PB1-4 | x | 4x | m | 8m |
| PB1-2 | y | 3y | p | 8p |
| PI1-4 | z | 7z | q | 10q |
| PI3-4 | n | 6n | t | 10t |
| * valeurs exprimées en unité d'aire. | | | | |

Ce tableau doit se lire de la façon suivante : x représente la fraction de PB1-4 non hydrogéné dans le copolymère. On a donc une contribution des protons aliphatiques du PB1-4 de 4x correspondant aux 4 protons aliphatiques Hc et Hd d'un motif 1-4 non hydrogéné.

Pour les motifs hydrogénés, on peut reprendre l'exemple du PB1-4 :

m représente la fraction de PB1-4 qui a été hydrogéné et sa contribution aliphatique vaut 8m, correspondant aux 8 protons du PB1-4 hydrogénés (de même pour les autres motifs hydrogénés).

Sur le spectre $^1$H du copolymère hydrogéné, on peut intégrer les différents signaux de la manière suivante : α', β', γ', δ' représentent les intégrales de la zone éthylénique (motifs non hydrogénés) et w correspond à la partie aliphatique du spectre (motifs hydrogénés et non hydrogénés).

| δ (ppm) | Attributions | Intégrale |
|---|---|---|
| 5.60 - 5.25 | Ha, Hb, Hn | α' |
| 5.25 - 5.00 | Hp | β' |
| 5.00 - 4.85 | 2Ho | γ' |
| 4.85 - 4.60 | 2Hk | δ' |
| 2.60 - 0.40 | Zone aliphatique (2Hc, 2Hd, 2Hg, 2Hf, 3He, 2Hh, Hi, 3Hj, 2Hl, Hm + extrémités de chaînes saturées (négligeables)+ protons des doubles liaisons hydrogénées) | w |

L'analyse du spectre du copolymère hydrogéné permet de calculer les valeurs x, y, z et n de la façon suivante :

$$x=0,5*(2\alpha'-\gamma')$$

$$y=\gamma'/2$$

$$z=\beta'$$

$$n=\delta'/2$$

Pour déterminer la quantité de motifs hydrogénés et leur stéréochimie avant hydrogénation, on peut écrire les équations qui suivent.

On appellera S la somme de tous les motifs qu'ils soient hydrogénés ou non :

$$S= x + y +z + n + m + p + q + t \qquad (1)$$

Les fractions molaires du copolymère initial (non hydrogéné) correspondent à :

$$a= ( x +m ) / S(2)$$

$$b=( y + p ) / S \ (3)$$

$$c=( z + q ) / S \ (4)$$

$$d=( n + t ) / S \ (5)$$

De plus, l'intégrale de la partie aliphatique (motifs hydrogénés et non hydrogénés) correspond à :

$$w= 4x + 3y + 7z + 6n + 8m + 8p + 10q + 10t \qquad (6)$$

D'après les équations précédentes, on peut écrire l'égalité suivante :

$$w = 4x + 3y + 7z + 6n + 8(aS-x) + 8(bS-y) + 10(cS-z) + 10\ (dS-n)$$

$$\text{d'ou } S = ( w + 4x + 5y + 3z + 4n) / (8(a + b) + 10(c + d)) \quad (7)$$

On en déduit ensuite m, p, q, et t d'après les équations (2), (3), (4) et (5). Les pourcentages molaires après hydrogénation de chaque espèce s'obtiennent à partir des formules consignées dans le tableau II suivant.

**Tableau II**

| | Pourcentage molaire | |
|---|---|---|
| Motif | Résiduel | Hydrogéné |
| PB1-4 | 100x/S | 100m/S |
| PB1-2 | 100y/S | 100p/S |
| PI1-4 | 100z/S | 100q/S |
| PI3-4 | 100n/S | 100t/S |

A partir des résultats molaires, on peut aisément obtenir les résultats massiques.

**ANNEXE 2 :**

**Détermination de la distribution des masses moléculaires des élastomères obtenus par la technique de chromatographie d'exclusion par la taille (SEC).**

a) Principe de la mesure:

La chromatographie d'exclusion par la taille ou SEC (size exclusion chromatography) permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier.

Sans être une méthode absolue, la SEC permet d'appréhender la distribution des masses moléculaires d'un polymère. A partir de produits étalons commerciaux, les différentes masses moyennes en nombre (Mn) et en poids (Mw) peuvent être déterminées et l'indice de polydispersité calculé (Ip = Mw/Mn).

b) Préparation du polymère:

Il n'y a pas de traitement particulier de l'échantillon de polymère avant analyse. Celui-ci est simplement solubilisé dans du tétrahydrofurane à une concentration d'environ 1 g/l.

c) Analyse SEC:

L'appareillage utilisé est un chromatographe « WATERS alliance ». Le solvant d'élution est le tétrahydrofurane, le débit de 1 ml/min., la température du système de 35° C et la durée d'analyse de 90 min. On utilise un jeu de deux colonnes de dénomination commerciale « STYRAGEL HT6E ».

Le volume injecté de la solution de l'échantillon de polymère est 100 $\mu$l. Le détecteur est un réfractomètre différentiel « WATERS 2140 » et le logiciel d'exploitation des données chromatographiques est le système « WATERS MILLENIUM ».

**ANNEXE 3 :**

**Détermination des propriétés de la composition de liaison selon l'invention**

1) Viscosité Mooney ML(1+4) à 100° C: mesurée selon la norme ASTM D 1646 de 1999.

2) Mesures de rhéométrie : réalisées à 165° C selon la norme DIN 53529, avec un rhéomètre à chambre oscillante de type MCCS « C » (chambre de mesure de type parallèle), selon la norme DIN 53529 - partie 3 (juin 1983). L'évolution du couple rhéométrique en fonction du temps décrit l'évolution de la rigidification de la composition par suite de la réticulation.
Les mesures sont traitées selon cette norme DIN 53539 - partie 2 (mars 1983).
$C_{min}$, $C_{max}$. : couples minimum et maximum, mesurés en décinewton mètre (dNm).
k est la constante de vitesse de conversion.
$t_i$ : délai d'induction (temps nécessaire au démarrage de la réticulation).
$t_{90}$, $t_{95}$, $t_{99}$ : temps nécessaires pour atteindre des conversions de 90 %, 95 % et 99 %.

3) Indices de rupture Scott: mesurés à 20° C selon la norme ASTM D 412 de 1998 ; force de rupture (MPa) et allongement à la rupture (%): mesurés selon la norme ASTM D 412 de 1998.

4) Pertes hystérétiques (PH): mesurées en % par rebond à 60° C au sixième choc, selon la relation suivante :

PH (%) =100 x $(W_0-W_1)/W_1$, avec $W_0$ : énergie fournie et $W_1$ : énergie restituée ;

5) Modules d'allongement sécants apparents MAS 10, MAS 100 et MAS 300:

mesures effectuées selon la norme ASTM D 412 de 1998 ;

**ANNEXE 4 : Méthode utilisée pour les tests de « pelage » de plaques flexibles**

Il s'agit de tests de « pelage » réalisés à une température de 23° C, suivant un angle de 180° (séparation en « T ») et une vitesse de traverse de 100 mm/ min, selon la norme ASTM D 1876 dé 1995.

A la différence des spécifications du paragraphe 5 de cette norme, on a utilisé des plaques de dimensions (en mm) 150 x 300 (au lieu de 152 x 305 dans ladite norme) que l'on a fait adhérer l'une à l'autre sur 100 mm dans le sens des 150 mm de largeur des plaques, de telle sorte que celles-ci n'adhèrent pas l'une à l'autre sur les 50 mm restants de leur largeur, puis que l'on a découpées dans le sens de la largeur des plaques pour obtenir des tiges en forme de « T » de 150 mm de longueur et de 25 mm de largeur, qui sont pourvues d'une amorce en aluminium de 0,8 mm d'épaisseur et de 24 cm de longueur.

A la différence des spécifications du paragraphe 7 de cette norme, on a utilisé une vitesse de traction de 220 mm/ min (au lieu de 254 mm/ min dans ladite norme).

**Revendications**

1. Utilisation d'une composition de caoutchouc de liaison réticulable ou réticulée pour faire adhérer, à l'état réticulé, une première composition de caoutchouc comprenant un terpolymère d'éthylène, de propylène et d'un diène, à une seconde composition de caoutchouc, à base d'au moins un élastomère diénique dont le taux molaire d'unités issues de diènes conjugués est supérieur à 50 %, **caractérisée en ce que** ladite composition de liaison est à base d'au moins un élastomère diénique hydrogéné à blocs, de masse moléculaire moyenne en nombre supérieure à 20 000 g/mol, comportant un bloc polybutadiène dans lequel le taux d'unités butadiène hydrogénées est égal ou supérieur à 60 % et un bloc polyisoprène.

2. Utilisation selon la revendication 1, **caractérisée en ce que** ledit élastomère diénique hydrogéné est un copolymère à deux blocs, étant constitué dudit bloc polybutadiène et dudit bloc polyisoprène.

3. Utilisation selon la revendication 1 ou 2, **caractérisée en ce qu'**elle comprend un système de réticulation comprenant au moins un peroxyde organique qui est destiné à la réticulation desdites unités butadiène hydrogénées.

**4.** Utilisation selon la revendication 3, **caractérisée en ce que** ledit système de réticulation comprend en outre du soufre.

**5.** Utilisation selon la revendication 3, **caractérisée en ce que** ledit système de réticulation est constitué dudit ou desdits peroxydes organiques.

**6.** Utilisation selon une des revendications précédentes, **caractérisée en ce que** ledit bloc polybutadiène comporte des unités butadiène hydrogénées selon un taux égal ou supérieur à 70 %.

**7.** Utilisation selon la revendication 6, **caractérisée en ce que** ledit bloc polybutadiène comporte des unités butadiène hydrogénées selon un taux égal ou supérieur à 80 %.

**8.** Utilisation selon une des revendications précédentes, **caractérisée en ce que** la fraction massique dudit bloc polybutadiène dans ledit élastomère diénique hydrogéné est égale ou supérieure à 40 % et inférieure ou égale à 60 %, celle dudit bloc polyisoprène étant inférieure ou égale à 60 % et supérieure ou égale à 40 %.

**9.** Utilisation selon une des revendications précédentes, **caractérisé en ce que**, dans ledit élastomère diénique, ledit bloc polybutadiène comprend un taux d'unités 1,2 compris entre 40 % et 60 %.

**10.** Utilisation selon une des revendications précédentes, **caractérisé en ce que**, dans ledit élastomère diénique, ledit bloc polyisoprène comprend un taux d'unités 3,4 compris entre 5 % et 15 %.

**11.** Utilisation selon une des revendications précédentes, **caractérisée en ce que** la masse moléculaire moyenne en nombre dudit élastomère diénique hydrogéné est comprise entre 50 000 g/mol et 200 000 g/mol.

**12.** Utilisation selon la revendication 11, **caractérisée en ce que** la masse moléculaire moyenne en nombre dudit élastomère diénique hydrogéné est comprise entre 80 000 g/mol et 150 000 g/mol.

**13.** Utilisation selon une des revendications précédentes, **caractérisée en ce que** ledit élastomère diénique hydrogéné présente un indice de polymolécularité inférieur à 2.

**14.** Utilisation selon une des revendications précédentes, **caractérisée en ce que** ledit élastomère diénique hydrogéné est le produit de la réaction d'hydrogénation dudit élastomère diénique à bloc, susceptible d'être obtenu par polymérisation anionique en solution, et d'un catalyseur d'hydrogénation à base de cobalt, tel que l'octoate de cobalt.

**15.** Utilisation selon une des revendications précédentes, **caractérisée en ce qu'**elle comprend une matrice élastomère qui est constituée dudit élastomère diénique hydrogéné.

**16.** Utilisation selon une des revendications précédentes, **caractérisée en ce qu'**elle comprend, selon une quantité allant de 30 à 60 pce, une charge renforçante comprenant une charge inorganique renforçante et/ou du noir de carbone (pce : parties en poids pour cent parties d'élastomère(s)).

**17.** Utilisation selon une des revendications précédentes, **caractérisée en ce qu'**elle présente, à l'état réticulé et mesuré selon la norme ASTM D 412, un module sécant apparent MAS10 à 10 % de déformation qui est compris entre 2 et 6 MPa.

**18.** Profilé de liaison (9) utilisable pour faire adhérer, à l'état réticulé, une couche externe circonférentielle (8) d'un flanc (4) d'enveloppe de pneumatique (1) à la partie en regard d'une nappe de carcasse (7) de ladite enveloppe (1) qui est ancrée dans ledit flanc (4), ladite couche externe (8) étant constituée d'une première composition de caoutchouc comprenant un terpolymère d'éthylène, de propylène et d'un diène, ladite nappe de carcasse (7) comprenant une seconde composition de caoutchouc à base d'au moins un élastomère diénique dont le taux molaire d'unités issues de diènes conjugués est supérieur à 50 %, **caractérisé en ce que** ledit profilé de liaison (9) est constitué d'une composition de caoutchouc de liaison telle que définie à l'une des revendications 1 à 17.

**19.** Profilé de liaison (9) selon la revendication 18, **caractérisé en ce qu'**il présente une épaisseur inférieure ou égale à 1 mm.

**20.** Enveloppe de pneumatique (1) qui comporte un sommet (2) prolongé par deux flancs (4) se terminant respectivement

par deux bourrelets (5) et qui comporte une nappe de carcasse (7) ancrée dans lesdits bourrelets (5), chaque flanc (4) étant délimité axialement vers l'extérieur par au moins une couche externe (8) solidarisée à ladite nappe (7) par un profilé de liaison (9), ladite couche externe (8) étant constituée d'une première composition de caoutchouc comprenant un terpolymère d'éthylène, de propylène et d'un diène, ladite nappe de carcasse (7) comprenant une seconde composition de caoutchouc à base d'au moins un élastomère diénique dont le taux molaire d'unités issues de diènes conjugués est supérieur à 50 %, **caractérisée en ce que** ledit profilé de liaison (9) est tel que défini à l'une des revendications 18 ou 19.

**21.** Enveloppe de pneumatique (1) selon la revendication 20, **caractérisée en ce que** la matrice élastomère de ladite première composition de caoutchouc comprend :

- selon une fraction massique allant de 20 % à 100 %, ledit terpolymère d'éthylène, de propylène et d'un diène et
- selon une fraction massique allant de 80 % à 0 %, au moins un élastomère diénique dont le taux molaire d'unités issues de diènes conjugués est supérieur à 50 %.

**22.** Enveloppe de pneumatique (1) selon la revendication 21, **caractérisée en ce que** la matrice élastomère de ladite première composition de caoutchouc comprend :

- selon une fraction massique allant de 50 % à 80 %, ledit terpolymère d'éthylène, de propylène et d'un diène, et
- selon une fraction massique allant de 50 % à 20 %, ledit ou lesdits élastomères diéniques dont le taux molaire d'unités issues de diènes conjugués est supérieur à 50 %.

**23.** Enveloppe de pneumatique (1) selon la revendication 21 ou 22, **caractérisée en ce que** ladite première composition de caoutchouc comprend du caoutchouc naturel et à titre optionnel un polybutadiène, à titre d'élastomère(s) diénique (s) dont le taux molaire d'unités issues de diènes conjugués est supérieur à 50 %.

**24.** Enveloppe de pneumatique (1) selon une des revendications 20 à 23, **caractérisée en ce que** la matrice élastomère de ladite seconde composition de caoutchouc comprend du caoutchouc naturel, un polybutadiène et un copolymère de styrène et de butadiène.

**25.** Procédé de fabrication d'une enveloppe de pneumatique (1) selon une des revendications 20 à 24, comprenant les étapes suivantes :

(i) la préparation par malaxage de compositions de caoutchouc réticulables incluant ladite première composition pour ladite couche externe, ladite seconde composition pour ladite nappe de carcasse (7) et ladite composition de liaison pour ledit profilé de liaison (9),
(ii) le façonnage de ladite couche externe (8) et dudit profilé de liaison (9),
(iii) la confection d'une ébauche d'enveloppe réticulable dans laquelle ledit profilé de liaison (9) est mis en contact par ses faces (9a, 9b) respectives avec ladite couche externe (8) et avec ladite nappe de carcasse (7), et
(iv) la cuisson de ladite ébauche dans un moule pour obtenir ladite enveloppe (1), **caractérisé en ce que** dans ladite étape (i), on prépare ladite composition de liaison par malaxage d'un élastomère diénique hydrogéné à blocs, de masse moléculaire moyenne en nombre supérieure à 20 000 g/mol, comportant un bloc polybutadiène dans lequel le taux d'unités butadiène hydrogénées est égal ou supérieur à 60 % et un bloc polyisoprène, avec des additifs utilisés dans la fabrication de pneumatiques comprenant notamment un système de réticulation et une charge renforçante.

**26.** Procédé de fabrication selon la revendication 25, **caractérisé en ce que** dans ladite étape (ii), on façonne par extrusion ledit profilé de liaison (9) au moyen d'un dispositif d'extrusion qui comprend un rouleau rotatif, un orifice d'entrée de ladite composition de liaison et une voûte recouvrant circonférentiellement et partiellement la surface extérieure dudit rouleau, ladite composition de liaison étant refoulée à partir dudit orifice d'entrée dans l'entrefer situé entre ladite voûte et ledit rouleau vers un orifice d'extrusion définissant le profil dudit profilé de liaison (9), délimité par une paroi qui coopère avec ladite surface extérieure, ladite voûte portant sur sa surface intérieure orientée vers ledit rouleau des filets saillants afin de délimiter avec ladite surface extérieure une chambre de plastification de ladite composition de liaison, deux aux moins desdits filets s'étendant sensiblement axialement.

**Claims**

1. Use of a crosslinkable or crosslinked tie rubber composition for making adhere, in the crosslinked state, a first rubber composition comprising a terpolymer of ethylene, of propylene and of a diene, to a second rubber composition, based on at least one diene elastomer having a molar content of units originating from conjugated dienes that is greater than 50%, **characterized in that** said tie composition is based on at least one hydrogenated diene block elastomer, having a number-average molecular weight of greater than 20 000 g/mol, comprising a polybutadiene block in which the content of hydrogenated butadiene units is greater than or equal to 60% and a polyisoprene block.

2. Use according to Claim 1, **characterized in that** said hydrogenated diene elastomer is a copolymer containing two blocks, being constituted of said polybutadiene block and of said polyisoprene block.

3. Use according to Claim 1 or 2, **characterized in that** it comprises a crosslinking system comprising at least one organic peroxide which is intended for the crosslinking of said hydrogenated butadiene units.

4. Use according to Claim 3, **characterized in that** said crosslinking system also comprises sulphur.

5. Use according to Claim 3, **characterized in that** said crosslinking system is constituted of said organic peroxide or peroxides.

6. Use according to one of the preceding claims, **characterized in that** said polybutadiene block comprises hydrogenated butadiene units in a content greater than or equal to 70%.

7. Use according to Claim 6, **characterized in that** said polybutadiene block comprises hydrogenated butadiene units in a content greater than or equal to 80%.

8. Use according to one of the preceding claims, **characterized in that** the weight fraction of said polybutadiene block in said hydrogenated diene elastomer is greater than or equal to 40% and less than or equal to 60%, that of said polyisoprene block being less than or equal to 60% and greater than or equal to 40%.

9. Use according to one of the preceding claims, **characterized in that**, in said diene elastomer, said polybutadiene block comprises a content of 1,2- units of between 40% and 60%.

10. Use according to one of the preceding claims, **characterized in that**, in said diene elastomer, said polyisoprene block comprises a content of 3,4- units of between 5% and 15%.

11. Use according to one of the preceding claims, **characterized in that** the number-average molecular weight of said hydrogenated diene elastomer is between 50 000 g/mol and 200 000 g/mol.

12. Use according to Claim 11, **characterized in that** the number-average molecular weight of said hydrogenated diene elastomer is between 80 000 g/mol and 150 000 g/mol.

13. Use according to one of the preceding claims, **characterized in that** said hydrogenated diene elastomer has a polydispersity index of less than 2.

14. Use according to one of the preceding claims, **characterized in that** said hydrogenated diene elastomer is the product of the hydrogenation reaction of said diene block elastomer, capable of being obtained by anionic polymerization in solution, and of a cobalt-based hydrogenation catalyst, such as cobalt octoate.

15. Use according to one of the preceding claims, **characterized in that** it comprises an elastomer matrix which is constituted of said hydrogenated diene elastomer.

16. Use according to one of the preceding claims, **characterized in that** it comprises, in an amount ranging from 30 to 60 phr, a reinforcing filler comprising a reinforcing inorganic filler and/or carbon black (phr: parts by weight per hundred parts of elastomer(s)).

17. Use according to one of the preceding claims, **characterized in that** it has, in the crosslinked state and measured according to the standard ASTM D 412, an apparent secant modulus MAS10 at 10% strain which is between 2 and

6 MPa.

**18.** Tie profiled element (9) that can be used to make adhere, in the crosslinked state, a circumferential outer layer (8) of a sidewall (4) of a tyre cover (1) to the opposite portion of a carcass ply (7) of said cover (1) which is anchored in said sidewall (4), said outer layer (8) being constituted of a first rubber composition comprising a terpolymer of ethylene, of propylene and of a diene, said carcass ply (7) comprising a second rubber composition based on at least one diene elastomer having a molar content of units originating from conjugated dienes that is greater than 50%, **characterized in that** said tie profiled element (9) is constituted of a tie rubber composition as defined in one of Claims 1 to 17.

**19.** Tie profiled element (9) according to Claim 18, **characterized in that** it has a thickness of less than or equal to 1 mm.

**20.** Tyre (1) which comprises a crown (2) extended by two sidewalls (4) that end respectively with two beads (5) and which comprises a carcass ply (7) anchored in said beads (5), each sidewall (4) being delimited axially outwards by at least one outer layer (8) firmly attached to said ply (7) by a tie profiled element (9), said outer layer (8) being constituted of a first rubber composition comprising a terpolymer of ethylene, of propylene and of a diene, said carcass ply (7) comprising a second rubber composition based on at least one diene elastomer having a molar content of units originating from conjugated dienes that is greater than 50%, **characterized in that** said tie profiled element (9) is as defined in either of Claims 18 and 19.

**21.** Tyre (1) according to Claim 20, **characterized in that** the elastomer matrix of said first rubber composition comprises:

- in a weight fraction ranging from 20% to 100%, said terpolymer of ethylene, of propylene and of a diene; and
- in a weight fraction ranging from 80% to 0%, at least one diene elastomer having a molar content of units originating from conjugated dienes that is greater than 50%.

**22.** Tyre (1) according to Claim 21, **characterized in that** the elastomer matrix of said first rubber composition comprises:

- in a weight fraction ranging from 50% to 80%, said terpolymer of ethylene, of propylene and of a diene; and
- in a weight fraction ranging from 50% to 20%, said diene elastomer or elastomers having a molar content of units originating from conjugated dienes that is greater than 50%.

**23.** Tyre (1) according to Claim 21 or 22, **characterized in that** said first rubber composition comprises natural rubber and optionally a polybutadiene, as diene elastomer(s) having a molar content of units originating from conjugated dienes that is greater than 50%.

**24.** Tyre (1) according to one of Claims 20 to 23, **characterized in that** the elastomer matrix of said second rubber composition comprises natural rubber, a polybutadiene and a copolymer of styrene and of butadiene.

**25.** Process for manufacturing a tyre (1) according to one of Claims 20 to 24, comprising the following steps:

(i) the preparation, by kneading, of crosslinkable rubber compositions including said first composition for said outer layer, said second composition for said carcass ply (7) and said tie composition for said tie profiled element (9),
(ii) the shaping of said outer layer (8) and of said tie profiled element (9),
(iii) the building of a crosslinkable tyre blank in which said tie profiled element (9) is brought into contact, via its respective faces (9a, 9b) with said outer layer (8) and with said carcass ply (7), and
(iv) the curing of said tyre blank in a mould in
order to obtain said tyre (1),
**characterized in that**, in said step (i), said tie composition is prepared by kneading a hydrogenated diene block elastomer, having a number-average molecular weight of greater than 20 000 g/mol, comprising a polybutadiene block in which the content of hydrogenated butadiene units is greater than or equal to 60% and a polyisoprene block, with additives used in tyre manufacture comprising in particular a crosslinking system and a reinforcing filler.

**26.** Manufacturing process according to Claim 25, **characterized in that**, in said step (ii), said tie profiled element (9) is shaped via an extrusion using an extrusion device that comprises a rotary roller, an inlet orifice of said tie composition and a vault that covers, circumferentially and partially, the outer surface of said roller, said tie composition

being driven from said inlet orifice into the gap located between said vault and said roller towards an extrusion orifice that defines the profile of said tie profiled element (9), which is delimited by a wall that cooperates with said outer surface, said vault bearing on its internal surface oriented towards said roller, projecting threads in order to delimit, with said outer surface, a chamber for plasticization of said tie composition, at least two of said threads extending substantially axially.

## Patentansprüche

1. Verwendung einer vernetzbaren oder vernetzten Binde-Kautschukzusammensetzung, um zu bewirken, dass, im vernetzten Zustand, eine erste Kautschukzusammensetzung, die ein Terpolymer aus Ethylen, Propylen und einem Dien umfasst, an einer zweiten Kautschukzusammensetzung anhaftet, die auf mindestens einem Dien-Elastomer beruht, bei welchem der molare Anteil an Einheiten, die aus konjugierten Dienen hervorgehen, größer als 50 % ist, **dadurch gekennzeichnet, dass** die Bindezusammensetzung auf mindestens einem hydrierten Block-Dien-Elastomer beruht, dessen Zahlenmittel der Molmasse größer als 20.000 g/mol ist, wobei es ein Block-Polybutadien, bei welchem der Anteil an hydrierten Butadien-Einheiten mindestens 60 % beträgt, sowie ein Block-Polyisopren aufweist.

2. Verwendung nach Anspruch 1, **dadurch gekennzeichnet, dass** es sich bei dem hydrierten Dien-Elastomer um ein Copolymer mit zwei Blöcken handelt, das aus dem Block-Polybutadien und dem Block-Polyisopren besteht.

3. Verwendung nach Anspruch 1 oder 2, **dadurch gekennzeichnet, dass** sie ein Vernetzungssystem umfasst, das mindestens ein organisches Peroxid umfasst, welches dazu bestimmt ist, die hydrierten Butadien-Einheiten zu vernetzen.

4. Verwendung nach Anspruch 3, **dadurch gekennzeichnet, dass** das Vernetzungssystem darüber hinaus Schwefel umfasst.

5. Verwendung nach Anspruch 3, **dadurch gekennzeichnet, dass** das Vernetzungssystem aus dem oder den organischen Peroxid(en) besteht.

6. Verwendung nach einem der vorhergehenden Ansprüche, **dadurch gekennzeichnet, dass** das Block-Polybutadien hydrierte Butadien-Einheiten zu einem Anteil von mindestens 70 % aufweist.

7. Verwendung nach Anspruch 6, **dadurch gekennzeichnet, dass** das Block-Polybutadien hydrierte Butadien-Einheiten zu einem Anteil von mindestens 80 % aufweist.

8. Verwendung nach einem der vorhergehenden Ansprüche, **dadurch gekennzeichnet, dass** der massenbezogene Anteil des Block-Polybutadiens in dem hydrierten Dien-Elastomer mindestens 40 % und höchstens 60 % beträgt, wobei derjenige des Block-Polyisoprens höchstens 60 % und mindestens 40 % beträgt.

9. Verwendung nach einem der vorhergehenden Ansprüche, **dadurch gekennzeichnet, dass**, in dem Dien-Elastomer, das Block-Polybutadien einen Gehalt an 1,2-Einheiten umfasst, der im Bereich von 40 % bis 60 % liegt.

10. Verwendung nach einem der vorhergehenden Ansprüche, **dadurch gekennzeichnet, dass**, in dem Dien-Elastomer, das Block-Polyisopren einen Gehalt an 3,4-Einheiten umfasst, der im Bereich von 5 % bis 15 % liegt.

11. Verwendung nach einem der vorhergehenden Ansprüche, **dadurch gekennzeichnet, dass** das Zahlenmittel der Molmasse des hydrierten Dien-Elastomers im Bereich von 50.000 g/mol bis 200.000 g/mol liegt.

12. Verwendung nach Anspruch 11, **dadurch gekennzeichnet, dass** das Zahlenmittel der Molmasse des hydrierten Dien-Elastomers im Bereich von 80.000 g/mol bis 150.000 g/mol liegt.

13. Verwendung nach einem der vorhergehenden Ansprüche, **dadurch gekennzeichnet, dass** das hydrierte Dien-Elastomer einen Polymolekularitätsindex von weniger als 2 aufweist.

14. Verwendung nach einem der vorhergehenden Ansprüche, **dadurch gekennzeichnet, dass** das hydrierte Dien-Elastomer das Produkt der Hydrierungsreaktion ist, bei der das Block-Dien-Elastomer, welches durch anionische

Polymerisation in Lösung erhalten werden kann, sowie ein Hydrierungskatalysator auf Grundlage von Kobalt, wie etwa von Kobaltoctoat, eingesetzt werden.

**15.** Verwendung nach einem der vorhergehenden Ansprüche, **dadurch gekennzeichnet, dass** sie eine Elastomermatrix umfasst, die aus dem hydrierten Dien-Elastomer besteht.

**16.** Verwendung nach einem der vorhergehenden Ansprüche, **dadurch gekennzeichnet, dass** sie, in einer Menge von 30 bis 60 phr, einen verstärkenden Füllstoff umfasst, der einen anorganischen verstärkenden Füllstoff und/oder Ruß umfasst (phr:

Gewichtsteile auf hundert Teile an Elastomer(en)).

**17.** Verwendung nach einem der vorhergehenden Ansprüche, **dadurch gekennzeichnet, dass** sie, im vernetzten Zustand und gemessen gemäß der Norm ASTM D 412, ein scheinbares Sekantenmodul MAS10 bei 10 % Verformung aufweist, das im Bereich von 2 bis 6 MPa liegt.

**18.** Verbindungsprofilstück (9), das dazu verwendet werden kann zu bewirken, dass, im vernetzten Zustand, eine äußere umlaufende Schicht (8) einer Seitenwand (4) eines Luftreifenmantels (1) am gegenüberliegenden Abschnitt einer Karkassenlage (7) des Mantels (1) anhaftet, wobei diese in der Seitenwand (4) verankert ist, wobei die äußere Schicht (8) aus einer ersten Kautschukzusammensetzung besteht, die ein Terpolymer aus Ethylen, Propylen und einem Dien umfasst, wobei die Karkassenlage (7) eine zweite Kautschukzusammensetzung umfasst, die auf mindestens einem Dien-Elastomer beruht, bei welchem der molare Anteil an Einheiten, die aus konjugierten Dienen hervorgehen, größer als 50 % ist, **dadurch gekennzeichnet, dass** das Verbindungsprofilstück (9) aus einer Binde-Kautschukzusammensetzung besteht, wie sie in einem der Ansprüche 1 bis 17 definiert ist.

**19.** Verbindungsprofilstück (9) nach Anspruch 18, **dadurch gekennzeichnet, dass** es eine Dicke von höchstens 1 mm aufweist.

**20.** Luftreifen (1), der eine Lauffläche (2) aufweist, die sich in zwei Seitenwänden (4) fortsetzt, welche in zwei Wülsten (5) enden, und der eine Karkassenlage (7) aufweist, die in den Wülsten (5) verankert ist, wobei jede Seitenwand (4) axial nach außen von mindestens einer äußeren Schicht (8) begrenzt wird, die mittels eines Verbindungsprofilstücks (9) fest mit der Lage (7) verbunden ist, wobei die äußere Schicht (8) aus einer ersten Kautschukzusammensetzung besteht, die ein Terpolymer aus Ethylen, Propylen und einem Dien umfasst, wobei die Karkassenlage (7) eine zweite Kautschukzusammensetzung umfasst, die auf mindestens einem Dien-Elastomer beruht, bei welchem der molare Anteil an Einheiten, die aus konjugierten Dienen hervorgehen, größer als 50 % ist, **dadurch gekennzeichnet, dass** das Verbindungsprofilstück (9) der Definition in einem der Ansprüche 18 oder 19 entspricht.

**21.** Luftreifen (1) nach Anspruch 20, **dadurch gekennzeichnet, dass** die Elastomermatrix der ersten Kautschukzusammensetzung Folgendes umfasst:

- zu einem massenbezogenen Anteil von 20 % bis 100 %, das Terpolymer aus Ethylen, Propylen und einem Dien, und
- zu einem massenbezogenen Anteil von 80 % bis 0 %, mindestens ein Dien-Elastomer, bei dem der molare Anteil an Einheiten, die aus konjugierten Dienen hervorgehen, größer als 50 % ist.

**22.** Luftreifen (1) nach Anspruch 21, **dadurch gekennzeichnet, dass** die Elastomermatrix der ersten Kautschukzusammensetzung Folgendes umfasst:

- zu einem massenbezogenen Anteil von 50 % bis 80 %, das Terpolymer aus Ethylen, Propylen und einem Dien, und
- zu einem massenbezogenen Anteil von 50 % bis 20 %, das oder die Dien-Elastomer(e), bei dem/denen der molare Anteil an Einheiten, die aus konjugierten Dienen hervorgehen, größer als 50 % ist.

**23.** Luftreifen (1) nach Anspruch 21 oder 22, **dadurch gekennzeichnet, dass** die erste Kautschukzusammensetzung natürlichen Kautschuk und möglicherweise ein Polybutadien als Dien-Elastomer(e) umfasst, bei dem/denen der molare Anteil an Einheiten, die aus konjugierten Dienen hervorgehen, größer als 50 % ist.

**24.** Luftreifen (1) nach einem der Ansprüche 20 bis 23, **dadurch gekennzeichnet, dass** die Elastomermatrix der

zweiten Kautschukzusammensetzung natürlichen Kautschuk, ein Polybutadien und ein Copolymer von Styrol und Butadien umfasst.

**25.** Verfahren zur Herstellung eines Luftreifens (1) nach einem der Ansprüche 20 bis 24, welches die folgenden Schritte umfasst:

(i) Herstellen der vernetzbaren Kautschukzusammensetzungen durch mechanisches Vermischen, einschließlich der ersten Zusammensetzung für die äußere Schicht, der zweiten Zusammensetzung für die Karkassenlage (7) und der Bindezusammensetzung für das Verbindungsprofilstück (9),
(ii) Ausarbeiten der äußeren Schicht (8) und des Verbindungsprofilstücks (9),
(iii)Herstellen eines vernetzbaren Reifenrohlings,
wobei das Verbindungsprofilstück (9) mit seinen jeweiligen Flächen (9a, 9b) mit der äußeren Schicht (8) beziehungsweise mit der Karkassenlage (7) in Kontakt gebracht wird, und
(iv) Erhitzen des Rohlings in einer Form, um den
Luftreifen (1) zu erhalten,

**dadurch gekennzeichnet, dass** in Schritt (i) die Bindezusammensetzung hergestellt wird, indem ein hydriertes Block-Dien-Elastomer, dessen Zahlenmittel der Molmasse größer als 20.000 g/mol ist, wobei es ein Block-Polybutadien, bei welchem der Anteil an hydrierten Butadien-Einheiten mindestens 60 % beträgt, sowie ein Block-Polyisopren aufweist, mit Zusatzstoffen mechanisch vermischt wird, welche bei der Luftreifenherstellung Verwendet werden und welche insbesondere ein Vernetzungssystem und einen verstärkenden Füllstoff umfassen.

**26.** Herstellungsverfahren nach Anspruch 25, **dadurch gekennzeichnet, dass** in Schritt (ii) das Verbindungsprofilstück (9) durch Extrusion ausgearbeitet wird, mittels einer Extrusionsvorrichtung, die einen Drehzylinder, eine Öffnung zur Einspeisung der Bindezusammensetzung und eine Überwölbung, welche die Außenfläche des Zylinders entlang dem Umfang teilweise bedeckt, umfasst, wobei die Bindezusammensetzung ausgehend von der Einspeiseöffnung in den Zwischenraum befördert wird, der sich zwischen der Überwölbung und dem Zylinder befindet, in Richtung einer Extrusionsöffnung, die das Profil des Verbindungsprofilstücks (9) definiert, wobei sie von einer Wand begrenzt wird, die mit der Außenfläche zusammenwirkt, wobei die Überwölbung auf ihrer Innenfläche, welche dem Zylinder zugewandt ist, hervorspringende Längsstrukturen trägt, um mit der Außenfläche eine Plastifizierungskammer für die Bindezusammensetzung abzugrenzen, wobei mindestens zwei der Längsstrukturen sich im Wesentlichen axial erstrecken.

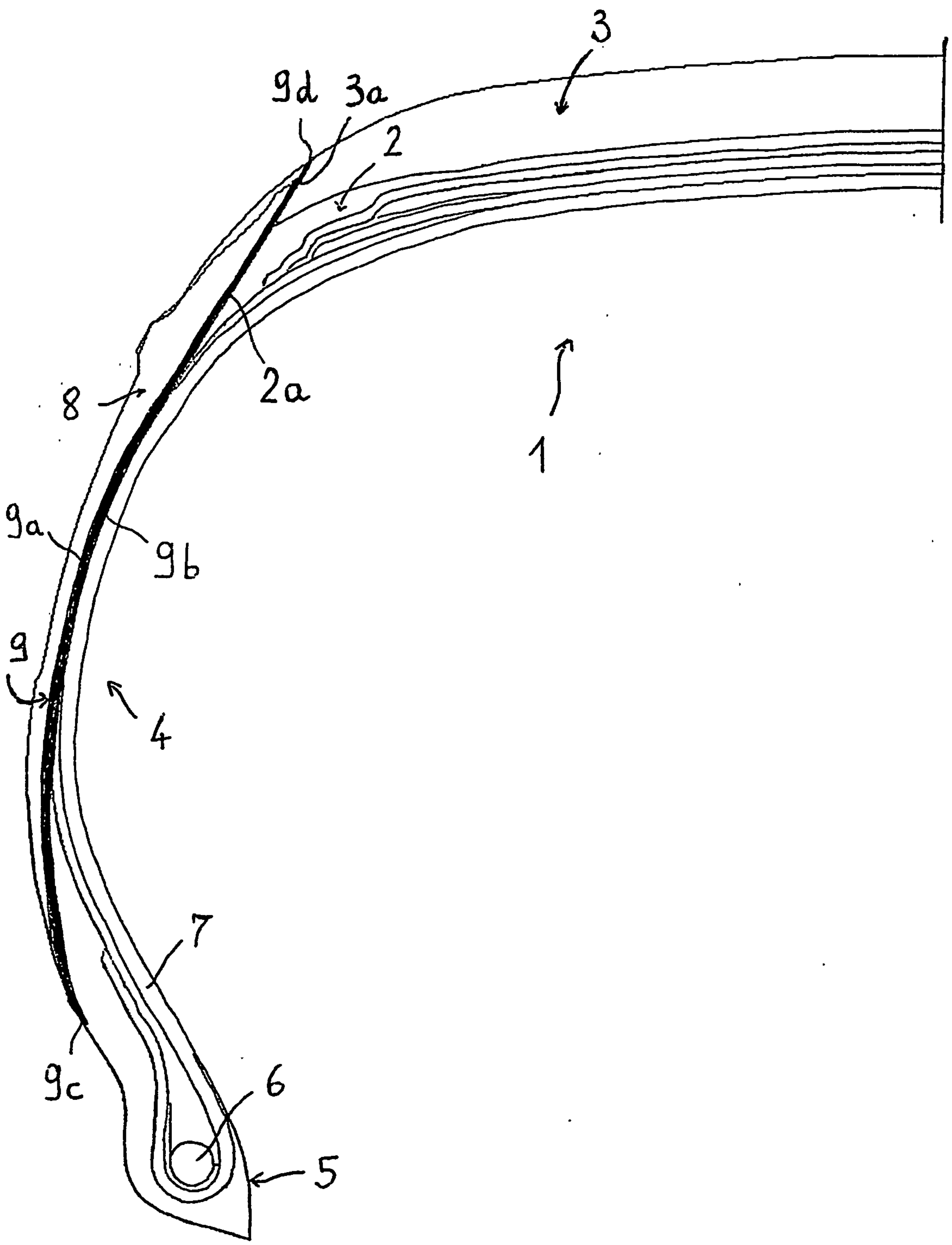


Fig. unique

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 735088 A
- WO 9637547 A
- EP 0203774 W
- WO 0242053 A


### Littérature non-brevet citée dans la description


- **BRUNAUER-EMMETT-TELLER.** *The Journal of the American Chemical Society,* Février 1938, vol. 60, 309